# EUROPEAN PATENT SPECIFICATION

(11) **EP 4 255 973 B1**
(45) Date of publication and mention of the grant of the patent: **30.10.2024**
(21) Application number: 21830618.1
(22) Date of filing: 01.12.2021
(51) Int. Cl.: C08J 9/12, C08J 9/18, C08J 9/232

(54) **NANOCELLULAR EXPANDED POLYMER BEADS, METHOD OF MANUFACTURE AND USES**
NANOZELLULÄRE EXPANDIERTE POLYMERKÜGELCHEN, VERFAHREN ZUR HERSTELLUNG UND VERWENDUNGEN
BILLES POLYMÈRES NANOCELLULAIRES EXPANSÉES, PROCÉDÉ DE FABRICATION ET UTILISATIONS

(30) Priority: 02.12.2020 ES 202031205
(43) Date of publication of application: 11.10.2023
(73) Proprietor: Cellmat Technologies S.L., 47011 Valladolid (ES)
(72) Inventor: MÚGICA IZAGUIRRE, Mikel, 47011 Valladolid (ES); BERNARDO GARCÍA, Victoria, 47011 Valladolid (ES); MARTÍN DE LEÓN, Judith, 47011 Valladolid (ES); SANCHEZ CALDERÓN, Ismael, 47011 Valladolid (ES); RODRÍGUEZ PÉREZ, Miguel Ángel, 47011 Valladolid (ES)
(74) Representative: Balder IP Law, S.L.
(86) International application number: PCT/EP2021/083757
(87) International publication number: WO 2022/117642

(56) References cited:
- EP-A1- 3 670 586
- US-A1- 2015 203 647

## Description

### TECHNICAL SECTOR

The present invention is comprised in the technical sector of polymeric cellular materials and, particularly, relates to obtaining nanocellular polymeric materials with improved insulating and mechanical properties.

### STATE OF THE ART

Polymeric cellular materials are present in virtually all industrial sectors as a result of their excellent properties such as weight reduction, high rigidity and strength, thermal and acoustic insulation or impact energy absorption, among others, combined with a low economic cost. Ever since microcellular polymers (with cells in the range of a few microns) were developed at the beginning of the 1980s (Eaves, D. Handbook of Polymer Foams; Rapra Technology Limited: Shawbury, Shrewsbury, Shropshire, SY4 4NR, UK, 2004; ISBN 1859573886), research on materials of this type has increased considerably. One of the main causes of this growing interest is the improvement of the mechanical properties with respect to conventional cellular polymers *(*Shimbo, M.; Higashitani, I.; Miyano, Y. Mechanism of strength improvement of foamed plastics having fine cell. J. Cell. Plast. 2007, 43, 157-167*;* Juntunen, R. P.; Kumar, V.; Weller, J.E.; Bezubic, W.P. Impact strength of high density microcellular poly(vinyl chloride) foams. J. Vinyl Addit. Technol. 2000, 6, 93-99*;* Collias, D.I.; Baird, D.G.; Borggreve, R.J.M. Impact toughening of polycarbonate by microcellular foaming. Polymer (Guildf). 1994, 35, 3978-3983*;* Bureau, M.N.; Kumar, V. Fracture toughness of high density polycarbonate microcellular foams. J. Cell. Plast. 2006, 42, 229-240*;* Kumar, V.; VanderWel, M.; Weller, J.; Seeler, K.A. Experimental Characterization of the Tensile Behavior of Microcellular Polycarbonate Foams. J. Eng. Mater. Technol. 1994, 116, 439*)*. In recent years, these results have led to attempts to improve control of the cellular structure and to decrease cell size, which thereby led to obtaining nanocellular polymers a little over a decade ago. These polymers, with cell sizes less than one micron, have properties of enormous interest, such as the improvement of some mechanical properties with respect to microcellular polymers *(*Miller, D.; Kumar, V. Microcellular and nanocellular solid-state polyetherimide (PEI) foams using sub-critical carbon dioxide II. Tensile and impact properties. Polymer (Guildf). 2011, 52, 2910-2919*;* Notario, B.; Pinto, J.; Rodríguez-Pérez, M.A. Towards a new generation of polymeric foams: PMMA nanocellular foams with enhanced physical properties. Polymer (Guildf). 2015, 63, 116-126*)* and the considerable reduction of thermal conductivity *(*Notario, B.; Pinto, J.; Solorzano, E.; De Saja, J.A.; Dumon, M.; Rodríguez-Pérez, M.A. Experimental validation of the Knudsen effect in nanocellularpolymeric foams. Polym. (United Kingdom) 2015, 56, 57-67*).* It is as a result of this latter property that one of the main applications of nanocellular polymers is thermal insulation. Currently, studies relative to thermal insulation efficiency *(*Yilmaz, Z. Evaluation of energy efficient design strategies for different climatic zones: Comparison of thermal performance of buildings in temperate-humid and hot-dry climate. Energy Build. 2007, 39, 306-316*;* Al-Sanea, S.A.; Zedan, M.F.; Al-Hussain, S.N. Effect of thermal mass on performance of insulated building walls and the concept of energy savings potential. Appl. Energy 2012, 89, 430-442*)* are gaining importance due to the toughening of environmental laws. To that end, one of the solutions involves replacing the materials that are currently used for this purpose with others which present much lower thermal conductivity and are more efficient, such as nanocellular polymers.

With the development of microcellular and nanocellular polymers, research linked to the study and optimisation of the methods of production thereof has also been enhanced, in the attempt to improve control over the size of the cellular structure and the homogeneity of these cellular polymers, also referred to as polymeric foams. This is because the properties of these materials are linked to the methods of production. Some of the techniques for the manufacture of nanocellular polymers are phase separation, imprint lithography and foaming *(*Notario, B.; Pinto, J.; Rodriguez-Perez, M.A. Nanoporous polymeric materials: A new class of materials with enhanced properties. Prog. Mater. Sci. 2016, 78-79, 93-139*;* Hentze, H. P.; Antonietti, M. Porous polymers and resins for biotechnological and biomedical applications. Rev. Mol. Biotechnol. 2002, 90, 27-53*).* While the two first techniques are generally limited to the manufacture of films and require the use of organic solvents, which can be contaminants, foaming, and more specifically gas dissolution foaming, is one of the most promising techniques. This is because with this technique, good control over the size and the homogeneity of the cellular structure is achieved. Furthermore, if inert gases such as CO₂ or N₂ are used, the process can be more environmentally-friendly since they are non-contaminating gases which can be extracted from the material without leaving any residue *(*Kumar, V.; Suh, N.P. A process for making microcellular thermoplastic parts. Polym. Eng. Sci. 1990, 30, 1323-1329*).*

Much of the research relating to nanocellular polymers is performed on a laboratory scale by means of a batch production process (commonly referred to as batch foaming). In this process, polymeric samples several mm thick are placed in a vessel into which gas is introduced at a high pressure (autoclave) at a given temperature *(*Costeux, S. CO2 -Blown Nanocellular Foams. J. Appl. Polym. Sci. 2015, 132*).* Once sufficient time for the gas to be diffused in the polymer (saturation process) has elapsed, the autoclave is abruptly depressurised. If the saturation process is performed at a relatively low temperature, once the autoclave is depressurised it is necessary to extract the sample from inside the autoclave and heat it for expansion and formation of the nanocellular polymer to take place. This process, also called solid-state foaming, is the most widely used to try to obtain low density nanocellular polymers *(*Martin-de León, J.; Bernardo, V.; Rodríguez-Pérez, M.A. Low density nanocellular polymers based on PMMA produced by gas dissolution foaming: Fabrication and cellular structure characterization. Polymers (Basel). 2016, 8*),* although achieving sufficient low densities is still a challenge today. Meeting this objective would represent an even more considerable reduction of the thermal conductivity by being combined with cells of a nanometric size *(*Wang, G.; Wang, C.; Zhao, J.; Wang, G.; Park, C.B.; Zhao, G. Modelling of thermal transport through a nanocellular polymer foam: Toward the generation of a new superinsulating material. Nanoscale 2017, 9, 5996-6009*;* Bernardo, V.; Martin-de Leon, J.; Pinto, J.; Rodriguez-Perez, M.A.; Verdejo, R. Modeling the heat transfer by conduction of nanocellular polymers with bimodal cellular structures. Polymer (Guildf). 2018, 160, 126-137*).*

Some of the main drawbacks of this batch production process are that due to the time that elapses between depressurisation of the autoclave and foaming in a thermostatic bath, a solid skin is formed due to the gas being diffused out of the polymer. In some polymeric foams, particularly those of a lower density, this solid skin can be greater than 150 µm. Such a thick solid skin can represent a problem in obtaining low density polymeric foams, since the skin itself is dense and increases the density and, moreover, hinders expansion of the polymeric material, resulting in denser parts. In addition, the size of the samples is limited by the dimensions of the autoclave, the geometry of the foams depends on the geometry of the initial sample, and the long cycle time (for obtaining a polymeric foam with an average cell size of 100 nm, a relative density of 0.25 and a thickness of 4 mm, the cycle time is greater than the 6 hours) causes it to be a process that is not very productive and, therefore, far from meeting the requirements of an industrialisable process *(*Costeux, S. CO2 -Blown Nanocellular Foams. J. Appl. Polym. Sci. 2015, 132*;* Bernardo, V.; Martin-de Leon, J.; Laguna-Gutierrez, E.; Catelani, T.; Pinto, J.; Athanassiou, A.; Rodriguez-Perez, M.A. Understanding the role of MAM molecular weight in the production of PMMA/MAM nanocellular polymers. Polymer (Guildf). 2018, 153, 262-270*;* Pinto, J.; Dumon, M.; Pedros, M.; Reglero, J.; Rodriguez-Perez, M.A. Nanocellular CO2 foaming of PMMA assisted by block copolymer nanostructuration. Chem. Eng. J. 2014, 243, 428-435*)*.

A method of production of cellular polymers which has allowed solving the problem of obtaining foams with complex geometries and high expansions is the method known as bead foaming. This technology consists of producing three-dimensional foamed polymers from a wide range of polymer matrices, by means of moulding and melting small, foamed polymer particles commonly called expanded beads *(*Kee, E. Novel manufacturing processes for polymer bead foams, 2010*;* Daniel Klempner and Kurt C. Frisch Handbook of Polymeric Foams and Foam Technology. 2004, 31, 11201*).* Another advantage associated with bead foaming is the reduction in the bead production cycle time, making the implantation thereof in the industry possible despite also being a batch production process. This is because the smaller size of solid polymer precursors (commonly referred to as to as "solid beads" or "micropellets") which will subsequently form the expanded beads enables the diffusion of the foaming agent in the polymer to be performed in little time, while at the same time it allows the rapid extraction of the samples once the saturation process ends. The production of these expanded beads started to be developed in the 1950s with expandable polystyrene (EPS) *(*Stastny, F.; Gaeth, R. PRODUCTION OF POROUS MATERIALS FROM FILM-FORMING ORGANIC THERMOPLASTIC MASSES*.* US Patent 2681321, 1954*).* From that moment on, bead foaming started to capture the interest of researchers, extending the production of beads to polyolefin materials *(*Burning, J.; Deseke, O.; Meyke, J. METHOD OF PRODUCING A FOAMED GRANULATE*.* US Patent 6315931 B1, 2001*;* Hirosawa, K.; Shimada, S. PRE-FOAMED PARTICLES OF POLYPROPYLENE RESIN AND PROCESS FOR PRODUCTION THEREOF*.* US Patent 4379859, 1983; Schweinzer, J.; Fischer, J.; Grave, I. De; Kögel, W. PRODUCTION OF EXPANDED POLYOLEFIN BEADS*.* US Patent 5703135, 1997) such as expanded polypropylene (EPP), which started to be used in a widespread manner in the automobile sector due to its good mechanical and insulating properties *(*Hossieny, N.; Ameli, A.; Park, C.B. Characterization of expanded polypropylene bead foams with modified steam-chest molding. Ind. Eng. Chem. Res. 2013, 52, 8236-8247*).* Recently, and inspired by new environmental laws, the use of expanded beads using volatile organic compounds (VOC) as foaming agents for their manufacture is being limited, as is the case of EPS *(*Sopher, S.R. Expanded Polyethylene Bead Foam Technology. 2018*;* Tang, L.; Zhai, W.; Zheng, W. Autoclave preparation of expanded polypropylene/poly(lactic acid) blend bead foams with a batch foaming process. J. Cell. Plast. 2011, 47, 429-446*).* In addition, and in the same line of environmental protection, the development of biodegradable and recyclable expanded polymers, such as expanded polylactic acid (EPLA), has started *(*Nofar, M.; Ameli, A.; Park, C.B. A novel technology to manufacture biodegradable polylactide bead foam products. Mater. Des. 2015, 83, 413-42*),* and research in the process of bead foaming using inert and non-contaminating gases has considerably intensified.

The manufacture of expanded beads with foaming agents of this type is usually performed in autoclaves which have an internal stirring system to facilitate diffusion of the gas inside the solid polymer beads, since said beads are suspended in a liquid medium, optionally with surfactants to prevent them from sticking to one another or from sticking to the metallic parts of the autoclave *(*Guo, Y.; Hossieny, N.; Chu, R.K.M.; Park, C.B.; Zhou, N. Critical processing parameters for foamed bead manufacturing in a lab-scale autoclave system. Chem. Eng. J. 2013, 214, 180-188*).* Once the time needed for the beads to be saturated with the foaming agent at a given pressure and given temperature has elapsed, the autoclave is depressurised through a valve which is usually located in the lower region thereof, thereby expelling the beads together with the water in which they were suspended. By means of controlling the conditions of saturation, it is possible to obtain a wide range of densities and cellular structures, which in the case of commercial beads can be relative densities greater than 0.05 and less than 0.1 and cell sizes which can range from several millimetres to a few microns. In the production of the most industrially used expanded beads such as expanded polypropylene (EPP), expanded thermoplastic polyurethane (ETPU) or expanded polyethylene (EPE), saturation temperatures close to or even in the range of temperatures in which the polymeric material forming the solid beads melts are used, because given the semicrystalline nature of these polymers, it is necessary to partially melt their crystals so that the foaming agent can be diffused inside the beads and thus subsequently be foamed *(*Guo, Y.; Hossieny, N.; Chu, R.K.M.; Park, C.B.; Zhou, N. Critical processing parameters for foamed bead manufacturing in a lab-scale autoclave system. Chem. Eng. J. 2013, 214, 180-188*).* In this manner, the polymer is soft enough for its expansion to take place together with depressurisation in what is commonly known as one-step foaming. In this case, one-step foaming allows producing low density expanded polymer beads from semicrystalline materials, since the crystallinity of the samples hinders diffusion of the gas and limits solubility. For that reason, it is necessary to reduce the amount of crystals in the material by increasing the temperature of the sample *(*Guo, P.; Liu, Y.; Xu, Y.; Lu, M.; Zhang, S.; Liu, T. Effects of saturation temperature/pressure on melting behavior and cell structure of expanded polypropylene bead. J. Cell. Plast. 2014*).*

The bead foaming technology has allowed nanocellular polymers (500 - 700 nm) to be obtained in a one-step process, but these polymers have relative densities greater than 0.45. When the attempt is made to decrease the density of the nanocellular polymeric materials in semicrystalline polymers, the need to use high saturation temperatures causes the occurrence of degeneration mechanisms of the cellular structure which considerably increase the average cell size. Accordingly, a method for the production of nanocellular polymers with a low density (particularly, with a relative density less than 0.25) have not yet been developed by this bead foaming process with semicrystalline polymers *(*Nofar, M.; Ameli, A.; Park, C.B. Development of polylactide bead foams with double crystal melting peaks. Polym. (United Kingdom) 2015, 69, 83-94*)*. In the case of using amorphous polymers, due to the high saturation temperatures required in the one-step process, even though the diffusivity of the foaming agent in the polymer is increased, the solubility therein is simultaneously limited, which means that low density nanocellular polymers are not obtained either *(*Pinto, J.; Reglero-Ruiz, J.A.; Dumon, M.; Rodriguez-Perez, M.A. Temperature influence and CO2 transport in foaming processes of poly(methyl methacrylate)-block copolymer nanocellular and microcellular foams. J. Supercrit. Fluids 2014, 94, 198-205*).*

EP3670586 A1 refers to micro-, sub-micron or nano-cellular polymer foams comprising a siloxane based copolymer, wherein the polymer foam has a density of less than or equal to 300 kg/m³. This document also refers to a method of forming said polymer bead foams.

Difficulties relative to the production of low density nanocellular polymeric materials by means of the methods existing both in the industry and on a laboratory level have been discussed above. These technical difficulties translate into long cycle times for obtaining low density nanocellular polymers, with limited geometries and a solid skin of hundreds of microns in the case of solid-state foaming (two steps). Furthermore, to date, only nanocellular polymers with a high density (particularly, a relative density equal to or greater than 0.45) have been obtained by means of the bead foaming technique in a single step. To that end, to enable the development of nanocellular polymers that can be industrialised and used, among other applications, as thermal insulators with a performance that is considerably superior to that of conventional insulators and at an affordable cost, it is necessary to develop a method which allows obtaining nanocellular polymers with a low or very low density, and preferably with a short cycle time.

### DESCRIPTION OF THE INVENTION

The present invention relates to low density nanocellular expanded polymer beads, that is, with a relative density with respect to the precursor solid beads or micropellets less than 0.25. These nanocellular beads can be obtained by means of dissolution foaming of a foaming agent, particularly a gas, through the bead foaming technology, particularly by means of the method of manufacture described herein. The optimisation of the foaming process in the method of the present invention allows reducing manufacturing times and, furthermore, obtaining nanocellular expanded polymer beads with considerably improved properties with respect to expanded beads obtained by other methods known to date.

More specifically, a first aspect of the present invention relates to expanded polymer beads as defined in claim 1 obtained or obtainable from solid polymer beads, particularly by means of foaming techniques, wherein the expanded polymer beads are characterised by comprising cells having an average size less than 1 µm, preferably less than 500 nm, and more preferably less than 300 nm; and a relative density less than 0.25, preferably less than 0.20, wherein the relative density is the ratio between the density of the expanded polymer beads with respect to the density of the precursor polymer beads of the expanded polymer beads.

In the context of the present invention, the terms "micropellets", "beads", "solid beads", "polymer beads" or "solid polymer beads" are used interchangeably to refer to polymer particles with a size between 0.5 mm and 4 mm, preferably between 0.6 mm and 2 mm, and more preferably between 0.6 and 1.5 mm; wherein this size corresponds to the diameter when the beads are spherical, or to the side having a larger dimension in the event of having any other shape. These precursor solid beads or micropellets of the expanded polymer beads of the present invention can have any shape, particularly, they can be spherical or have a prism shape with a cylindrical base, since the most widespread process of manufacturing same is by means of an extrusion process, and a filament in the form of a cylinder that is cut in order to generate each bead is obtained directly from the extruder. In the particular case of micropellets in the form of a prism with a cylindrical base, the aforementioned size could be the length of the prism or the diameter of the cylindrical base, according to whichever of the two dimensions is larger.

As mentioned above, the micropellets or solid beads are generally obtained by extrusion, although they can also be obtained by other methods such as, for example, by means of suspension polymerisation techniques. In the particular case of the manufacture by means of an extrusion process, the polymer, together with the additives to be included in the polymer matrix, are conveyed by one or two screws through different regions at a high temperature, transitioning to a molten state and being homogenised. Once the polymer exits the extruder, and by means of a cutting tool, polymeric micropellets are obtained. Based on the type of cutting tool, the size and geometry of these micropellets may vary. This cutting tool can be a conventional pelletiser, consisting of a device in which the polymer filament(s) previously cooled in air or in a liquid medium after exiting the extruder are introduced and, as a result of the rotation of a toothed wheel, the micropellets are generated. The polymeric micropellets manufactured with this tool have a cylindrical geometry, the diameter of which depends on the filament drawing speed and the length of which depends on the number of teeth the cutting tool has and its rotating speed. However, it is preferable to use an underwater cutting tool (known as an underwater pelletiser), whereby a higher production of micropellets or solid beads with a spherical geometry and more homogeneous sizes can be obtained. Furthermore, this cutting tool is more expensive than the previous one.

In the context of the present invention, it should also be understood that the terms "expanded beads" and "expanded polymer beads" can be used interchangeably and refer to polymer particles with a cellular structure originating an expansion of the precursor polymer particles and, accordingly, a reduction of their density. The expanded polymer beads of the present invention are obtained or obtainable from the micropellets or solid beads defined above which have been subjected to an expansion or foaming process, particularly by means of the method described herein, resulting in the creation of the cellular structure originating a reduction in the density of the beads. In addition, the expanded polymer beads according to the present invention have an internal structure formed by pores or cells with an average size (diameter) less than 1 micron, preferably less than 500 nm, and more preferably less than 300 nm, so they can also be referred to as "nanocellular beads", "nanocellular expanded polymer beads", or by means of similar combinations of the term "nanocellular" with the terms mentioned at the beginning of this paragraph. The expanded polymer beads of the present invention have a relative density less than 0.25, preferably less than 0.20, wherein the relative density is the ratio between the density of the expanded polymer beads with respect to the density of the micropellets, that is, the precursor solid beads of the expanded polymer beads by means of a foaming or expansion process.

It should also be understood that, in the context of the present invention, the terms "nanocellular polymeric materials", "nanocellular polymers", "nanocellular foams" or "nanocellular polymeric foams" refer to products obtained or obtainable from the expanded polymer beads described herein. Consequently, these polymeric materials, polymers or foams also have a nanocellular internal structure, that is, formed by cells with an average size less than 1 µm, preferably less than 500 nm, and more preferably less than 300 nm. In addition, these nanocellular polymeric materials, polymers or foams can be referred to as "low density", since they are formed from expanded beads having a relative density less than 0.25, or as "very low density" in those embodiments in which the materials, polymers or foams are formed from expanded beads with a relative density less than 0.20.

The average cell size of the expanded polymer beads can be determined using scanning electron microscopy (SEM) images combined with an image analysis software, such as Image J, for example. The software allows measuring the area of the cells observed in the micrograph and calculating the average diameter thereof. The data thus obtained correspond to a 2D analysis and can be corrected using standard factors of stereology to find the real 3D diameter of the cells. The method of measuring cell size has been described in the following paper [J. Pinto, E. Solorzano, M.A. Rodriguez-Perez, JA de Saja, Characterization of the cellular structure based on user-interactive image analysis procedures, Journal of Cellular Plastics, 49, 555-575, 2013]*.*

In order to know the relative density of the expanded polymer beads, on one hand, the density of the precursor solid beads or micropellets (*ρ_{solid}*) can be determined using a gas pycnometer. This method comprises filling a first chamber of a known volume with a certain amount of micropellets, previously weighed. This first chamber is filled with an inert gas (preferably nitrogen) to a pre-set working pressure (preferably 0.13 MPa). After stabilisation of the pressure, the gas from the first chamber which contains the sample is expanded to a second empty chamber, of a known volume, and the pressure at which the system is stabilised is measured. With the pressures measured in the first step and after the expansion, together with the known volumes of the chambers, it is possible to calculate the volume of the micropellet sample. The described method can be repeated at least 5 times to obtain a sufficiently precise measurement. The density of the micropellets is calculated as the ratio between the mass of the micropellets of the sample and the volume thereof determined with the gas pycnometer (weight/volume). The determination of density according to this method is performed in a range of temperatures between 21 and 23 °C.

Furthermore, the density of the expanded polymer beads (*ρ_{expanded}*) can be determined using a density kit coupled to a high precision balance, preferably of at least 0.0001 g, and by applying Archimedes' principle. The density kit consists of a vessel into which a liquid, preferably distilled water or ethanol, can be introduced and a device which allows weighing the samples in the liquid. At least 20 expanded polymer beads are weighed and their mass recorded. Next, the expanded beads are introduced in the liquid and weighed again. That second measurement provides information about the thrust experienced by the expanded beads of the sample by being submerged in a fluid. Specifically, it shows the difference between the weight and the thrust. With these two measurements, and by knowing the density of the liquid at the temperature at which the measurements are being taken (which are taken in a range of temperatures between 21 and 23 °C in the present invention), it is possible to calculate the density of the expanded beads as the ratio between weight and thrust, multiplying by the density of the liquid. The described method is repeated at least 5 times, using a total of at least 100 expanded polymer beads, to obtain a significant measurement of the average density of said beads.

Alternatively to using a gas pycnometer, the density of the solid polymer beads can also be determined by means of the method based on Archimedes' principle, which has been described above for the expanded beads. The use of both methods (gas pycnometer or Archimedes' principle) yields comparable results. However, because the gas pycnometer methodology is simpler, this method is generally preferred for determining the density of the micropellets.

The relative density of the expanded polymer beads is the measurement that allows determining the solid fraction present in an expanded or cellular material. In the case of the expanded polymer beads of the present invention, this value can be calculated by dividing the density of the expanded polymer beads (obtained by means of Archimedes' principle as described above) between the density of the precursor polymer micropellets of these expanded polymer beads (determined by means of Archimedes' principle as described above or, preferably, by means of gas pycnometry according to the method described herein). This parameter is of enormous interest in the sector of cellular materials, since it allows obtaining information with respect to the relative solid and gas fractions in the cellular material.

In accordance with the present invention, the expanded polymer beads comprise a solid skin with a thickness less than 5 µm and, even more preferably, less than 3 µm.

In the context of the present invention, it should be understood that the term "solid skin" or "outer skin" refers to the region present on the surface of each expanded bead, which penetrates the interior thereof, and in which the density of the material is similar to the density of the material constituting the precursor solid bead or micropellet.

The thickness of the solid skin can be obtained by means of scanning electron microscopy micrographs, considering that the region of the solid skin of the material is that region where there is no porosity. However, in the context of the present invention, the thickness of this solid skin is preferably determined using a criterion related to the variation in density based on the radius of the expanded polymer bead. In general, the density at the centre of the expanded polymer bead has a value lower than the density on the surface thereof, where the solid or outer skin is located; this density gradually decreases from the surface to the central region of the expanded polymer bead. Thus, the thickness of the solid skin is preferably defined as that region of the expanded polymer bead where the density is greater than or equal to 95% of the density of the precursor solid bead. The thickness of this solid or outer skin can be determined quantitatively by determining the density based on the radius of the expanded bead using X-ray radiographies or X-ray tomographies, which allow quantifying the density at each point of the expanded bead and by applying the criterion defined above.

The expanded polymer beads according to the present invention can be formed by any type of polymer and, particularly, by any type of amorphous polymer, semicrystalline polymer or mixtures of polymers of any of the two types. More specifically, the polymeric material can be selected from the group consisting of polymethylmethacrylate (PMMA), polymethylmethacrylate-polybutylacrylate-polymethylmethacrylate (MAM) copolymer, polycarbonate (PC), polyphenylsulfone (PPSU), polyetherimide (PEI), thermoplastic polyurethane (TPU), polypropylene (PP), polypropylene copolymers, polyethylene (PE), polyethylene terephthalate (PET), polyethylene terephthalate copolymers (PET(COP)), poly(vinyl chloride) (PVC), polyetheretherketone (PEEK), natural rubber (NR), ethylene propylene diene monomer (EPDM) rubber, polylactic acid (PLA), thermoplastic starch (TPS), polyhydroxybutyrate (PHB) and a combination of the above. Preferably, the polymeric material comprised in the expanded polymer beads is polymethylmethacrylate (PMMA), polymethylmethacrylate-polybutylacrylate-polymethylmethacrylate (MAM) copolymer or mixtures of both.

Optionally, the expanded polymer beads may comprise one or more additives such as, for example, nucleating agents such as nanoclays, nanosilica or graphene; flame retardants such as metal hydroxides, halogen compounds, intumescent compounds or non-halogen compounds; infrared radiation blockers such as carbon black, graphite, graphene or aluminium particles; reinforcements and nanoreinforcements such as talc, calcium carbonate, mica, nanoclays or nanosilica; or pigments. The nucleating additives can help and/or improve the nucleation rate (number of cells per cm³) and as a consequence reduce cell size; whereas the rest of the additives mentioned above allows improving the properties of the nanocellular polymeric materials, obtained or obtainable with the expanded polymer beads according to the present invention comprising said additives. Particularly, the presence of flame retardant additives improves the fire-resistant behaviour, the infrared radiation blockers help to reduce thermal conductivity, and the reinforcements or nanoreinforcements allow enhancing the mechanical properties of these nanocellular polymeric materials.

The low density nanocellular expanded polymer beads according to the present invention have excellent capabilities as thermal insulators. Their thermal conductivity is less than that of expanded beads manufactured with the same raw materials and with the same relative density, but with cells with sizes in the micrometric range (that is, above 1 µm). Particularly, the expanded polymer beads described in this patent application can have a thermal conductivity less than 38 mW/mK, preferably less than 32 mW/mK, and more preferably less than 27 mW/mK.

Another important advantage of the nanocellular expanded polymer beads of this invention is that they have a glass transition temperature greater than what expanded polymer beads manufactured with the same raw materials, but with cells with sizes in the micrometric range (that is, above 1 µm), would have. Accordingly, the nanocellular expanded beads according to the present invention can maintain their mechanical properties at higher temperatures. Particularly, the glass transition temperature (measured by means of differential scanning calorimetry (DSC)) of PMMA nanocellular beads manufactured according to the method of the present invention can be up to 5 °C more than that of the starting PMMA micropellets or than that of the expanded beads obtained from the same PMMA but with cell sizes greater than 1 micron.

In addition, the nanocellular beads according to the present invention provide excellent mechanical properties (particularly, rigidity, strength and toughness) to the nanocellular polymeric materials obtained or obtainable from same. These mechanical properties are superior to the mechanical properties of those cellular materials manufactured with the same raw materials and with the same relative density, but comprising cells with sizes in the micrometric range (that is, above 1 µm). Particularly, nanocellular structures comprising expanded polymer beads according to the present invention have a rigidity and strength up to 15% higher, as well as a toughness up to 30% higher than other cellular materials formed by expanded beads of the same polymeric material and relative density, but with cells having a size greater than 1 µm.

The present invention also relates to the expanded polymer beads obtained or obtainable by the method described herein. The specific conditions of the method for the manufacture of these expanded polymer beads confer to said beads specific structural characteristics which result in the improved properties, particularly the insulating and mechanical properties described hereinabove. More specifically, the nanocellular beads obtained or obtainable by the method of the present invention have an average cell size less than 1 µm, preferably less than 500 nm, and more preferably less than 300 nm; and a relative density less than 0.25, preferably less than 0.20, wherein the relative density is the ratio between the density of the expanded polymer beads with respect to the density of the solid polymer beads used as precursors in the method of manufacture described herein. In addition, these nanocellular beads can have a solid skin or outer skin with a thickness less than 5 µm and, even more preferably, less than 3 µm. The relative density, pore size and thickness of the solid skin of the expanded polymer beads obtained or obtainable by the method of the present invention can be measured as described herein.

The present invention also relates to an improved method for manufacturing nanocellular polymeric materials by means of bead foaming technology using a foaming agent, preferably an inert gas. As mentioned above, the method described herein allows obtaining low density nanocellular beads (relative density less than 0.25) and, more preferably, very low density nanocellular beads (relative density less than 0.20).

The improvement of the foaming technique provided by the present invention represents bringing nanocellular foams closer to industrialisation, since production times can be considerably reduced, in turn achieving a considerable improvement in the properties of the expanded polymer beads due to a smaller cell size (less than 1 µm) and a higher degree of expansion, that is, a lower density. Both characteristics are achieved by drastically reducing the transfer time, that is, the time that elapses between depressurisation of the autoclave and the foaming or expansion of the polymer beads in the second liquid medium. In addition, the method for the manufacture of nanocellular expanded polymer beads described herein allows for a wide versatility of polymeric materials and foaming conditions, which represents a further advantage with respect to the industrialisation thereof.

Thus, a further aspect of the present invention relates to a method for the manufacture of expanded polymer beads as described herein, by means of dissolution foaming of a foaming agent, preferably a gas, characterised in that the method comprises:
i) obtaining a dispersion of solid polymer beads or micropellets in an autoclave, wherein the dispersion comprises:
   a. solid polymer beads with a size between 0.5 mm and 4 mm, preferably 0.6 mm to 2 mm, and more preferably 0.6 mm to 1.5 mm; and
   b. a first liquid medium;
ii) adjusting the temperature of the dispersion of solid polymer beads to a saturation temperature (Ts) between -50 °C and 300 °C, preferably between -25 °C and 150 °C, more preferably between 0 and 100 °C, keeping the dispersion under stirring, preferably between 50 rpm and 1000 rpm;
iii) adding a foaming agent, preferably a gas, until reaching a pressure of 2 MPa to 150 MPa, preferably 4 MPa to 50 MPa, and more preferably 6 MPa to 35 MPa, keeping the dispersion of solid polymer beads under stirring and at the saturation temperature (Ts) as defined in step ii);
iv) maintaining the conditions of pressure, temperature and stirring indicated in step iii) for obtaining polymer beads saturated with the foaming agent;
v) depressurising the autoclave at a speed between 10 MPa/s and 1000 MPa/s, preferably between 20 MPa/s and 300 MPa/s, and more preferably between 50 MPa/s and 200 MPa/s, and simultaneously extracting the dispersion of polymer beads saturated with foaming agent from the autoclave, preferably by means of at least one depressurisation valve, into a second liquid medium at an expansion temperature between 0 °C and 300 °C, preferably between 25 °C and 200 °C, and more preferably between 50 °C and 150 °C; and
vi) keeping the dispersion of polymer beads saturated with foaming agent in the second liquid medium at the expansion temperature as defined in step v) for obtaining the expanded polymer beads,
wherein the period of time elapsed between the extraction from the autoclave until the saturated polymer beads are introduced into the second liquid medium at the established expansion temperature (Te) is a maximum of 15 seconds.

In the context of the present invention, "autoclave" should be understood to mean a vessel suitable for working under the conditions of pressure and temperature required by the method for the manufacture of expanded polymer beads described herein. Particularly, this vessel is capable of withstanding an inner temperature between -50 °C and 350 °C, as well as a pressure between 2 MPa to 150 MPa.

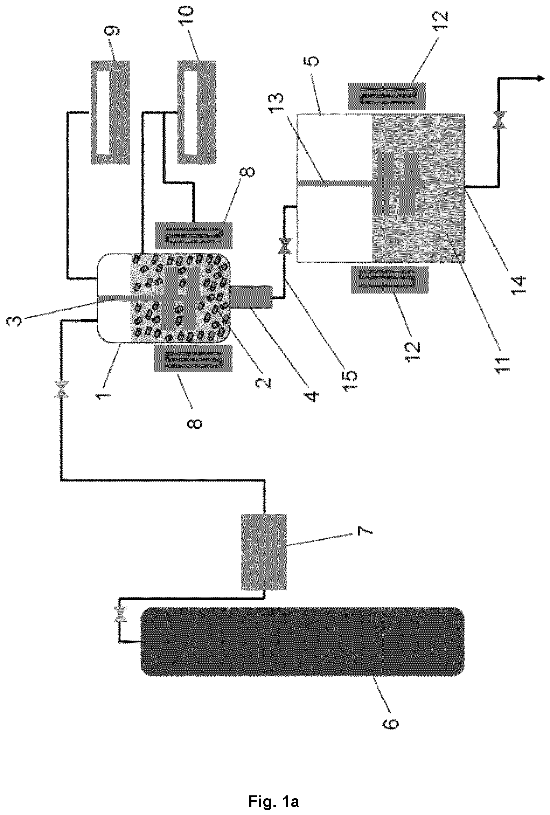

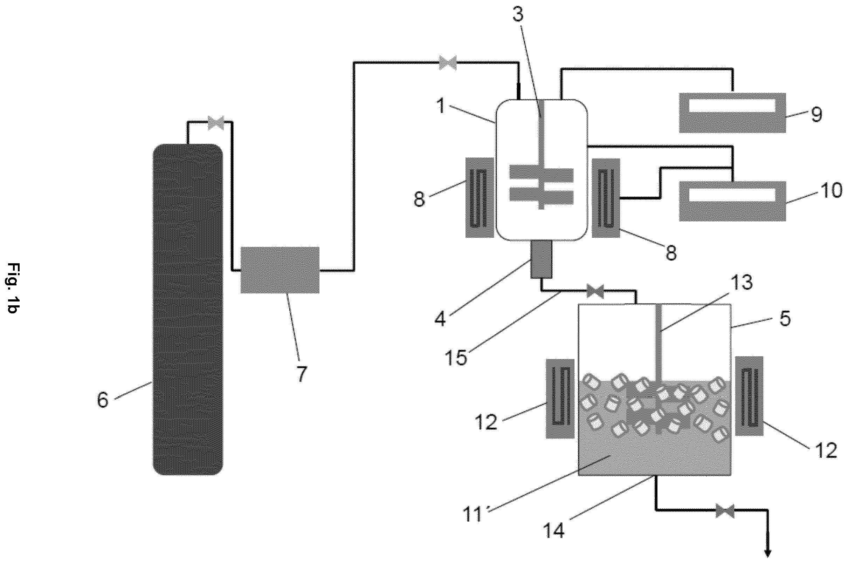

Particularly, the method for the manufacture of expanded polymer beads takes place in an autoclave with a stirring system, particularly this stirring system allows stirring the dispersion of beads at a speed between 50 rpm and 1000 rpm. Likewise, the autoclave in which the method of the present invention can be carried out comprises a depressurisation system suitable for carrying out depressurisation at a speed between 10 MPa/s and 1000 MPa/s, preferably between 20 MPa/s and 300 MPa/s, and more preferably between 50 MPa/s and 200 MPa/s. Depressurisation can take place by means of at least one depressurisation valve which can be located in the lower part of the autoclave, and/or in another position. In addition, this autoclave must have extraction means which allow the extraction of the dispersion of polymer beads saturated with inert gas from the autoclave, and the introduction thereof in a thermostatic bath where step vi) for expansion takes place. In particular embodiments of the present invention, the method for the production of expanded polymer beads can take place in a system such as the one shown in Figures 1a and 1b. The method for the manufacture of expanded polymer beads according to the present invention combines dissolution foaming of a foaming agent, particularly gas, by means of the bead foaming technique, with two-step foaming, with one of the essential features of the method being that the extraction of the saturated beads from the autoclave into a second liquid medium at the expansion temperature, where the subsequent expansion of the beads takes place, takes place simultaneously to depressurisation of the autoclave in step v) of the method. In accordance with the present invention, the period of time elapsed between step v) of depressurisation and extraction of the beads from the autoclave, and step vi) of expansion, also referred to as "transfer time" herein, is a maximum of 15 seconds. In even more preferred embodiments of the present invention, the transfer time is less than 10 seconds, less than 5 seconds and, even more preferably, less than 1 second. In this manner, the nanocellular beads with a relative density less than 0.25, preferably less than 0.20, described herein can be obtained in a very short cycle time, by means of a process that is environmentally-friendly particularly when non-contaminating inert gases are used as the foaming agent.

In the method of the present invention, it is preferred for the transfer time to be as short as possible, ideally zero, since the thickness of the outer skin of the nanocellular expanded polymer beads obtained can thereby be minimised. A suitable transfer time can be achieved, for example, by carrying out the method of the invention in a system where the outlet of the autoclave where saturation of the polymer beads takes place is directly connected to the thermostatic tank where the second liquid medium is found at the established expansion temperature (Te), such that upon depressurising the autoclave, the dispersion of saturated polymer beads passes directly to the second liquid medium contained in the thermostatic tank, also referred to as depressurisation tank herein.

The maximum transfer time may vary based on, for example, the diffusivity of the gas when depressurisation takes place. More specifically, this transfer time period may be greater as diffusivity decreases. Likewise, the maximum transfer time for given conditions can be increased by carrying out the method of the invention in a system where the outlet(s) of the autoclave where saturation of the polymer beads takes place is/are connected to the thermostatic tank where the second liquid medium is found at the established expansion temperature (Te), by connection means, for example, a pipe, heated at the same temperature. In this manner, the heating time of the saturated polymer beads can be reduced. This maximum transfer time period can be readily established for the different particular embodiments of the invention.

The method for the manufacture of expanded polymer beads described herein allows manufacturing large amounts of nanocellular polymer, without the geometric limitation of the size of the autoclave, and allows for a wide versatility in the use of different polymeric materials and foaming agents.

Further advantages of the method of the present invention are that it allows drastically reducing the thickness of the solid skin normally formed on the outside of the expanded beads. Particularly, the expanded polymer beads obtained by the method of manufacture described herein can have a solid skin with a thickness less than 15 µm, preferably less than 10 µm, more preferably, less than 5 µm and, even more preferably, less than 3 µm. This represents an important advantage with respect to other alternative methods of manufacture such as, for example, the batch process in which materials with a larger thickness of the solid skin, greater than 150 µm, are obtained. This is largely due to the fact that in the batch process quite a long time (reaching up to several minutes) elapses between the depressurisation and the introduction of the sample in the heated bath. The main problem of having a thick solid skin is that the density of the expanded beads is increased for two reasons: the skin itself is dense and contributes to increasing the density and, moreover, that solid skin hinders the expansion of the material, generating denser parts. In the method for the manufacture of expanded polymer beads of the present invention, due to the high depressurisation speeds, the saturated polymer beads can exit the autoclave less than 1 second after depressurisation starts and can be rapidly heated since they are transferred directly in the second liquid medium at the given expansion temperature (Te). In accordance with the present invention, the time that elapses from the extraction from the autoclave until they are introduced in the second liquid medium at the established expansion temperature (Te) is a maximum of 15 seconds, 10 seconds, 5 seconds, and the transfer time preferably being a maximum of 1 second. Therefore, the time the gas has to escape from the material and give rise to solid skin is much lower in the method of this invention, which entails a lower thickness of the solid skin.

In the method of the present invention, the dispersion of saturated beads extracted from the autoclave is transferred directly from the autoclave to the second liquid medium at the given expansion temperature (Te). In the context of the present patent application, it should be understood that this direct transfer can take place by suitable connection means (for example, a pipe) to allow the transfer of the dispersion of saturated beads from the autoclave to the second liquid medium in the desired time. In particular embodiments, these connection means can be heated at the established expansion temperature (Te).

By means of controlling the conditions of saturation of the polymer beads in the autoclave, as well as the temperature of the second liquid medium in step vi) of expansion, the method according to the present invention allows controlling the size and homogeneity of the cellular structure of the expanded beads obtained. As a consequence of the nanometric cell size (that is, less than 1 µm) and the reduction of density (particularly, relative density less than 0.25) achieved with the method of manufacture of the invention, the properties as thermal insulators of the expanded polymer beads obtained are significantly improved.

The polymer beads or micropellets used in the method of the present invention can have any shape, particularly, they can be spherical or have a prism shape with a cylindrical base. However, the polymer beads which are used in the method of production of expanded polymer beads of the invention have a size of 0.5 mm to 4 mm, preferably 0.6 mm to 2 mm, and more preferably 0.6 mm to 1.5 mm; wherein this size corresponds to the diameter when the beads are spherical, or to the side having a larger dimension in the event of having any other shape.

This size of the beads allows reducing the cycle time and, moreover, allows a sufficiently rapid heating of the saturated beads in step vi) of foaming or expansion. More specifically, the times for dissolving the foaming agent in the polymer beads are reduced with the square of the distance to the centre of the particles. In non-spherical beads, the smallest distance to the centre of the particles should be used to perform the estimation indicated above. Therefore, particles having smaller dimensions ensure a more rapid cycle and higher productivity. For example, with spherical beads with diameters of 1 mm, the cycle time of the method of the present invention is about 1 hour, whereas for beads with a diameter of 2 mm, the cycle time would be 4 hours.

Furthermore, both in step v) of depressurisation and in step vi) of expansion in the second liquid medium, the smaller the size of the beads, the more rapidly the temperature thereof changes, cooling down during depressurisation and heating up in the subsequent step for expansion. This allows retaining a higher amount of foaming agent inside the saturated bead, and obtaining in this manner nanocellular expanded beads with a lower density as the size of the precursor polymer beads decreases. With starting beads with a size greater than the established size, it would not be possible to obtain nanocellular expanded beads with a relative density less than 0.25 and, particularly, with a relative density less than 0.20.

The polymer beads can be formed by any type of polymer and, particularly, by any type of amorphous polymer, semicrystalline polymer or mixtures of polymers of any of the two types. This polymeric material can be selected from the group consisting of polymethylmethacrylate (PMMA), polymethylmethacrylate-polybutylacrylate-polymethylmethacrylate (MAM) copolymer, polycarbonate (PC), polyphenylsulfone (PPSU), polyetherimide (PEI), thermoplastic polyurethane (TPU), polypropylene (PP), polypropylene copolymers, polyethylene (PE), polyethylene terephthalate (PET), polyethylene terephthalate copolymers (PET(COP)), poly(vinyl chloride) (PVC), polyetheretherketone (PEEK), natural rubber (NR), ethylene propylene diene monomer (EPDM) rubber, polylactic acid (PLA), thermoplastic starch (TPS), polyhydroxybutyrate (PHB) and a combination of the above. Preferably, the polymeric material comprised in the polymer beads is polymethylmethacrylate (PMMA), polymethylmethacrylate-polybutylacrylate-polymethylmethacrylate (MAM) block copolymer, or a mixture of both.

In particular embodiments of the method for the manufacture of expanded polymer beads according to the present invention, the solid beads or micropellets can have as a polymeric base a commercial grade of polymethylmethacrylate (PMMA). The PMMA that is used can have a density which can range from 1.15 g/cm³ to 1.25 g/cm³ and a molecular weight which can range from 1000 g/mol to 2000000 g/mol. Preferably, the precursor polymer beads of the expanded polymer beads comprise PMMA with a density of 1.19 g/cm³ and a molecular weight between 750000 and 95000 g/mol.

Optionally, the polymer beads or micropellets may comprise one or more additives such as, for example, nucleating agents such as nanoclays, nanosilica or graphene; flame retardants such as metal hydroxides, halogen compounds, intumescent compounds or non-halogen compounds; infrared radiation blockers such as carbon black, graphite, graphene or aluminium particles; reinforcements and nanoreinforcements such as talc, calcium carbonate, mica, nanoclays or nanosilica; or pigments. The nucleating additives can help and/or improve the nucleation rate (number of cells per cm³) and, consequently, reduce the cell size of the expanded polymer beads obtained by means of the method of manufacture described herein. Furthermore, the rest of the aforementioned additives allow improving the properties of the nanocellular polymeric materials obtained or obtainable with the expanded polymer beads according to the present invention comprising said additives. Particularly, the presence of flame retardant additives improves the fire-resistant behaviour, the infrared radiation blockers help to reduce thermal conductivity, and the reinforcements or nanoreinforcements allow enhancing the mechanical properties of these nanocellular polymeric materials.

In those particular embodiments of the invention in which PMMA beads or micropellets are used, they can be obtained using a twin screw extruder, wherein the polymer is melted as it passes through various regions at a high temperature and is pushed towards a die as a result of the movement of the screws. The temperature at which the polymer exits the extruder can range from 150 °C up to 250 °C, preferably 200 °C. Once out of the extruder, the PMMA acquires a filament form. This can be introduced in a tank of water to cool it and to re-solidify the polymer. Subsequently, the solidified PMMA filament can be introduced in a pelletiser where, by means of a toothed wheel, it is transformed into beads or micropellets with a given size, particularly between 0.5 mm and 4 mm, preferably 0.6 mm to 2 mm, and more preferably 0.6 mm to 1.5 mm; wherein the size corresponds to the diameter when the beads are spherical, or to the side having a larger dimension in the event of having any other shape.

The first liquid medium comprised in the dispersion of polymer beads of step i) can be any liquid medium which allows a correct dispersion of the polymer beads, optionally with the help of an additive substance selected from surfactants, anticaking agents, antistatic agents or a combination of the above. This liquid medium can be water or an oil, preferably water.

It is preferable to use water as the first liquid medium, that is, as a liquid medium for the saturation of the polymer beads, due to its low viscosity and ease of cleaning. This liquid medium is particularly advantageous when the beads are formed by essentially hydrophobic polymers. The use of oils can be considered a valid alternative to water for dispersing the polymer beads or micropellets, particularly, when said beads or micropellets are formed by hydrophilic polymers such as PET, PLA or TPS; and/or when the saturation temperature (Ts) established in steps i) to iv) is equal to or greater than 100 °C.

In addition, the dispersion of polymer beads of step i) preferably comprises an additive substance selected from the group consisting of surfactants, anticaking agents, antistatic agents and a combination of the above. This additive substance, together with the continuous stirring of the dispersion, preferably at a speed between 50 rpm and 1000 rpm, allows preventing the polymer beads from clustering or sticking to the inside of the autoclave during the saturation process, in addition to facilitating saturation of the beads with the foaming agent.

The beads can be stirred in the autoclave by means of an internal stirrer which can be magnetic or mechanical, such that the beads flow through the autoclave, preventing them from clustering on the surface of the liquid medium or at the bottom of the autoclave. The stirring speed depends on the geometry of the stirrer and of the autoclave, as well as on how full the autoclave is with the dispersion of polymer beads. Particularly, the speed of stirring may range from 50 rpm up to 1000 rpm, preferably 400 rpm.

In particular embodiments of the present invention, the additive substance can be selected from high molecular weight, water-soluble substances such as polyvinyl alcohol, methyl cellulose, N-polyvinylpyrrolidone; inorganic substances scarcely soluble in water such as calcium phosphate, aluminium hydroxide, magnesium carbonate, magnesium pyrophosphate, zinc carbonate, titanium oxide, aluminium oxide, calcium stearate and talc; surfactant agents such as sodium lauryl sulphate or sodium alkyl sulphonate; and a combination of the above. Preferably, the additive substance is selected from the group consisting of sodium lauryl sulphate, talc, calcium stearate and a combination of the above.

The percentage by weight of polymer beads or micropellets in the dispersion of solid polymer beads of step i) is preferably 5% to 50%, more preferably 10% to 45%, and even more preferably 15% to 40%, amounts expressed by weight of beads with respect to the total weight of beads and first liquid medium, preferably water. Moreover, to generate the higher amount of expanded polymer beads per cycle, thus increasing the yield of the method of manufacture, maximising the amount of precursor solid beads in the dispersion of polymer beads of step i) is of interest. However, too high of an amount in the autoclave could hinder the dispersion of the particles in the first liquid medium, such that the beads may be touching one another, producing clusters of beads which could hinder or even impede the saturated beads from being able to exit the autoclave at the suitable speed through the extraction means thereof, for example, a discharge valve. The concentration ranges indicated above are advantageous since they represent an optimal compromise between the two aforementioned factors, productivity of the method and quality of the process as they allow preventing the clustering of the beads in the first liquid medium, particularly water or oils, preferably water.

In particular embodiments of the present invention, the percentage by weight of additive substance is preferably 0.1% to 3%, more preferably 0.5% to 2.5%, and even more preferably 0.8% to 1.5%, amounts expressed by weight of additive substance with respect to the total weight of the dispersion of solid polymer beads of step i) of the method for the manufacture of nanocellular expanded polymer beads described herein. With this concentration of additive substance in the dispersion of solid beads, an optimal balance is achieved between, on one hand, adding the smallest possible amount to reduce costs and contaminate the first liquid medium as little as possible, and, on the other hand, adding an amount of additive substance sufficient for obtaining a suitable dispersion of the polymer beads, such that it is possible to reduce or, preferably, prevent the clustering thereof in the dispersion for the purpose of obtaining nanocellular expanded polymer beads with the desired quality.

The dispersion of beads can take up from 50% to 99% of the capacity of the autoclave, preferably up to 85% to prevent overfilling from occurring.

Once the dispersion of polymer beads or micropellets inside the autoclave is obtained, the temperature of this dispersion is adjusted to a saturation temperature (Ts) between -50 °C and 300 °C, preferably between -25 °C and 150 °C, more preferably between 0 and 100 °C, keeping the dispersion under stirring. However, in some preferred embodiments of the present invention, the saturation temperature (Ts) in steps ii) to iv) can be established between -25 °C and 250 °C and, particularly, between -25 °C and 200 °C.

The saturation temperature (Ts) of steps ii) to iv) of the method of the present invention can be established based on the nature and characteristic thermal transitions of the polymer (or polymers) of the beads. An important aspect when selecting this parameter is the plasticising effect that gas has at the conditions of saturation. Particularly, the saturation temperature can be selected such that the state of the polymeric material when the pressure is released, that is, in step v) of depressurisation, is such that it allows preventing the expansion of the saturated beads during this step for depressurisation, thus achieving complete expansion during the subsequent foaming step. The person skilled in the art can consult the data widely available in the literature to know the plasticising effect of the gas used as a foaming agent in given conditions, such that the maximum saturation temperature (Ts) suitable for carrying out steps ii) to iv) of the method of the invention can readily be established. In particular embodiments of the present invention, the saturation temperature (Ts) is less than the glass transition temperature (Tg) or melting temperature (Tm) of the polymeric material forming the precursor solid beads.

Table 1 (see below) includes the ranges of the given saturation temperature (Ts) at which saturation of the polymer beads (steps ii) to iv) of the method of the invention can take place based on the polymeric materials comprised in the precursor polymer beads. Particularly, the polymers mentioned in Table 1 are polymethylmethacrylate (PMMA), polymethylmethacrylate-polybutylacrylate-polymethylmethacrylate (MAM) copolymer, polycarbonate (PC), polyphenylsulfone (PPSU), polyetherimide (PEI), thermoplastic polyurethane (TPU), polypropylene (PP), polyethylene (PE), polyethylene terephthalate (PET), polyethylene terephthalate copolymers (PET(COP)), poly(vinyl chloride) (PVC), polyetheretherketone (PEEK), natural rubber (NR), ethylene propylene diene monomer (EPDM) rubber, polylactic acid (PLA), thermoplastic starch (TPS) and polyhydroxybutyrate (PHB).

**Table 1: Saturation temperature (Ts) for different polymers**

| Polymer | Preferred Ts range (°C) | More preferred Ts range (°C) | Particularly preferred Ts range (°C) |
|---|---|---|---|
| PMMA | -50 to 150 | -25 to 100 | 0 to 50 |
| MAM | -50 to 150 | -25 to 100 | 0 to 50 |
| PC | -50 to 180 | -25 to 120 | 0 to 80 |
| PPSU | -50 to 300 | -25 to 250 | 0 to 200 |
| PEI | -50 to 250 | -25 to 200 | 0 to 150 |
| TPU | -50 to 250 | -25 to 200 | 0 to 150 |
| PP | -50 to 200 | -25 to 150 | 0 to 100 |
| PE | -50 to 150 | -25 to 100 | 0 to 50 |
| PET(COP) | -50 to 150 | -25 to 100 | 0 to 50 |
| PET | -50 to 300 | -25 to 250 | 0 to 200 |
| PVC | -50 to 300 | -25 to 250 | 0 to 200 |
| PEEK | -50 to 300 | -25 to 250 | 0 to 200 |
| NR | -50 to 200 | -25 to 150 | 0 to 100 |
| EPDM | -50 to 200 | -25 to 150 | 0 to 100 |
| PLA | -50 to 200 | -25 to 150 | 0 to 100 |
| TPS | -50 to 200 | -25 to 150 | 0 to 100 |
| PHB | -50 to 200 | -25 to 150 | 0 to 100 |

The temperature of the autoclave can be controlled precisely by means of a thermocouple, preferably placed inside the autoclave, and a temperature controller. The temperature of the bead saturation process will in part determine the speed at which the foaming agent is diffused in the polymer and the solubility thereof.

Once the saturation temperature (Ts) has been adjusted according to the values established in step ii) of the method, a foaming agent is added until reaching a pressure of 2 MPa to 150 MPa, preferably 4 MPa to 50 MPa, and more preferably 6 MPa to 35 MPa, keeping the dispersion of polymer beads under the conditions of stirring and temperatures described in relation to step ii).

The foaming agent used can be selected such that, based on its affinity with the polymeric material of the precursor micropellets, an optimal balance between solubility and diffusivity is achieved. Particularly, the foaming agent can be a volatile organic compound such as, for example, acetone or alcohols. In addition, the foaming agent used in the method of the present invention can be an inert gas such as, for example, nitrogen, carbon dioxide, helium or argon; or it can be another type of gas such as, for example, a hydrocarbon such as isobutane, cyclopentane, n-pentane, isopentane, cyclohexane; or other gases such as hydrogen, hydrofluoroolefins or hydrofluorocarbons.

In the method for the manufacture of expanded polymer beads of the present invention, the use of an inert gas as a foaming agent is preferred. Particularly, this inert gas can be nitrogen, carbon dioxide, helium or argon. In those embodiments in which the solid beads are formed by polymethylmethacrylate, polymethylmethacrylate-polybutylacrylate-polymethylmethacrylate (MAM) block copolymer, or a mixture of both, the inert gas preferably used for saturating said beads in the method described herein is CO₂.

Thus, with the polymer beads under stirring inside the autoclave, the foaming agent is introduced until achieving the desired saturation pressure within the established range. This increase in pressure can preferably be controlled by means of a pump or a pressure regulator. Throughout the entire process, the temperature is kept within the ranges established for obtaining optimal conditions of saturation. In some particular embodiments of the invention, step iii) of saturation can take place at room temperature, particularly between 20 °C and 30 °C, which allows obtaining a compromise between solubility and diffusivity of the foaming agent in the beads, while at the same time saving the time and power consumption involved in adjusting and stabilising the temperature of the autoclave at temperatures very different from the ambient temperature of the location where the manufacture of the expanded polymer beads as described herein takes place.

Throughout the saturation process, that is, steps ii) to iv) of the method for the manufacture of nanocellular expanded polymer beads according to the present invention, the beads are under constant stirring. The stirring speed can depend on the geometry of the stirrer; it is preferably between 50 rpm and 1000 rpm, more preferably 400 rpm.

Likewise, this polymer bead saturation process takes place at an established pressure comprised between 2 MPa and 150 MPa, preferably between 4 MPa and 50 MPa, and more preferably between 6 MPa and 35 MPa, including the upper and lower limits of each of these ranges. The pressure value at which step iv) of saturation takes place may depend on several factors, including among them the polymeric material, the target relative density or the temperature at which this step for saturation takes place.

Step iv) of saturation of the polymer beads can take place for a period of time long enough so as to ensure that the saturation process has been completed. Although these embodiments are less advantageous since the cycle is longer, they allow obtaining complete saturation without the need to determine the minimum saturation time, which may vary based on the polymer and the foaming agent used. The minimum saturation time can be readily obtained from the diffusivity of the system under the conditions in which saturation of the beads takes place, or by means of performing a reduced number of preliminary experiments at the working temperature and pressure, since once said minimum saturation period has been reached, the cellular structure of the expanded beads outside the region of the solid skin is homogeneous. In the method described herein, it is advantageous for the conditions of saturation to be maintained until reaching the minimum saturation time, since if saturation is not complete, cells having a larger size and a non-homogeneous cellular structure could be obtained, whereas an excessively long saturation time could negatively affect the cost-effectiveness of the method.

Once step iv) of saturation has elapsed, depressurisation of the autoclave takes place at a speed between 10 MPa/s and 1000 MPa/s, preferably between 20 MPa/s and 300 MPa/s, more preferably between 50 MPa/s and 200 MPa/s, being particularly preferably that the depressurisation takes place at a speed of 75 MPa/s, and the simultaneous extraction of the dispersion of polymer beads saturated with foaming agent, preferably inert gas, from the autoclave. This process of depressurising and emptying the autoclave can be performed by means of opening at least one depressurisation valve present in the autoclave where the saturation process has taken place. This valve can be located in the lower part of the autoclave, but it could also be in other positions. The pressure inside the autoclave when the process of depressurising and extracting the dispersion of saturated beads starts is so high that this dispersion can be rapidly extracted from the autoclave regardless of where the depressurisation valve is located.

The higher the depressurisation speed, the smaller the cell sizes and the smaller the densities obtained, which results in better insulating and mechanical properties of the expanded polymer beads. However, the method of the present invention allows obtaining low density nanocellular beads (that is, relative density less than 0.25) with a depressurisation speed from 10 MPa/s, particularly, between 50 MPa/s and 200 MPa/s and, particularly, at a speed of 75 MPa/s, which can be advantageous for the industrialisation of the method for the manufacture of expanded polymer beads described herein, since these depressurisation speed values are more readily obtained on an industrial scale.

In an immediate manner, in a maximum time period of 15 seconds, 10 seconds or 5 seconds, this transfer time preferably being a maximum of 1 second, the dispersion of polymer beads saturated with foaming agent, preferably inert gas, extracted from the autoclave in step v) of the method described herein is introduced in a second liquid medium at an expansion temperature (Te) between 0 and 300 °C, preferably between 25 °C and 200 °C, and more preferably between 50 °C and 150 °C. The second liquid medium can be, for example, water or silicone oil. In particular embodiments of the present invention, the second liquid medium is water, and it is at a temperature greater than 0 and less than 100 °C. In other particular embodiments in which the expansion temperature (Te) is equal to or greater than 100 °C, it is preferable to use silicone oil as the second liquid medium due to its thermal resistance.

Preferably, the expansion temperature (Te) of step vi) is equal to or greater than the saturation temperature (Ts) of steps ii) to iv).

Steps v) and vi) of the method for the manufacture of expanded polymer beads described herein, as well as the shorter time period elapsing between said steps, are essential for obtaining low density nanocellular beads. Unlike the foaming methods previously described, the method of the present invention allows foaming of the beads to be performed in two steps very rapidly. In this manner, by heating the saturated beads in a very short time interval, the loss of the gas of the foaming agent dissolved in the polymer is prevented, allowing greater expansion of the nanocellular beads, further preventing the formation of the solid skin of several microns appearing in nanocellular foams obtained in the two-step processes previously described.

In step v) of depressurisation and extraction of the dispersion of saturated beads, particularly when dealing with large volumes, a variation in the depressurisation speed can occur as the autoclave is being emptied due to the variation in pressure inside the autoclave. Consequently, the saturated beads extracted from the autoclave at the beginning of this step v) are extracted at a higher speed, resulting in expanded polymer beads with cell sizes and densities less than those that are obtained from saturated beads extracted from the autoclave at the end of this step for depressurisation, when the inner pressure of the autoclave is lower and, therefore, the depressurisation speed is also lower. This difference in depressurisation speed can cause certain heterogeneity in the dimensions and densities of the nanocellular beads of one same batch.

In particular embodiments of the present invention, the method described herein comprises injecting inert gas, preferably at the upper part of the autoclave, simultaneously to depressurisation of the autoclave in step v), for the purpose of maintaining the depressurisation speed with a variation of ± 10% with respect to the average depressurisation speed or, more preferably, constant throughout the entire depressurisation process (step v). Greater homogeneity in cell sizes and densities of the expanded polymer beads of one same batch is thereby achieved, which is particularly advantageous in the manufacture of large batches of nanocellular beads, that is, in production on an industrial scale.

Inert gases which can be injected into the autoclave simultaneously to depressurisation thereof are, for example, nitrogen, carbon dioxide, argon or helium. However, it is preferable to use nitrogen or carbon dioxide as they are less expensive and likewise valid gases.

Once the saturated beads have been introduced in the second liquid medium at the established expansion temperature (Te), they are kept under these conditions for a given expansion time. In particular embodiments of the present invention, the expansion time may range between 1 s and 120 s, more preferably between 5 s and 60 s.

Throughout the bead expansion process, density decreases as the beads are expanded, reaching a minimum value from which the density gradually increases again due to degeneration mechanisms of the cellular structure. To that end, it is preferable for the expansion time to be the optimal time for achieving expanded beads with the smallest density possible. The optimal expansion time, which can depend on the polymeric material, the initial size of the micropellets and the expansion temperature, can be readily obtained by means of performing a reduced number of tests. Particularly, this parameter can be obtained by performing a preliminary test under the working conditions and evaluating how the density evolves over the time the expanded beads remain in the second liquid medium at the given expansion temperature.

In relation to the aforementioned, the method for the manufacture of expanded beads of the present invention preferably comprises a further step vii) of stabilisation of the expanded beads, wherein the expanded beads of step vi) are cooled in the second liquid medium or extracted into a third liquid medium such as, for example, water, preferably once a given optimal expansion time as described herein has elapsed. To that end, the thermostatic bath in which the method of the invention can be carried out may comprise means for cooling the expanded beads in the second liquid medium and/or extracting them into a third liquid medium to stabilise the expanded beads. The stabilisation temperature at which the expanded beads are cooled can range between -10 °C and 30 °C, more preferably between 0 °C and 25 °C.

In those particular embodiments of the present invention wherein the polymer of the beads is polymethylmethacrylate (PMMA), step iii) may comprise adding CO₂ until reaching a pressure of between 6 MPa and 35 MPa, preferably 31 MPa, and in step iv) the conditions of pressure, temperature and stirring described herein are maintained. Preferably, the established conditions of saturation are maintained for a minimum saturation period of 1 hour for beads 1 mm in diameter.

In addition, in particular embodiments of the present invention wherein the polymer of the beads is PMMA, the saturation temperature (Ts) of steps ii) to iv) can be between -50 °C and 150 °C, preferably between -25 °C and 100 °C, more preferably between 0 and 50 °C and even more preferably between 20 °C and 40 °C; whereas the foaming or expansion temperature (Te) of step vi) can be between 50 °C and 130 °C, preferably between 60 °C and 115 °C, and more preferably between 70 °C and 105 °C; with the proviso that the saturation temperature (Ts) is equal to or less than the expansion temperature (Te).

In those particular embodiments of the present invention wherein the polymer of the beads is a mixture of polymethylmethacrylate (PMMA) and polymethylmethacrylate-polybutylacrylate-polymethylmethacrylate (MAM) copolymer, the amount of MAM in the mixture may range between 0.01% and 90% by weight, more preferably between 0.05% and 50%, even more preferably between 0.1% and 10%. In these particular embodiments, step iii) may comprise adding CO₂ until reaching a pressure of between 6 MPa and 35 MPa, preferably 15 MPa, and in step iv) the conditions of pressure, temperature and stirring described herein are maintained. Preferably, the established conditions of saturation are maintained for a minimum saturation period of 1 hour for beads 1 mm in diameter.

In addition, in particular embodiments of the present invention wherein the polymer of the beads is a mixture of PMMA and MAM, the saturation temperature (Ts) of steps ii) to iv) can be between -50 °C and 150 °C, preferably between -25 °C and 100 °C, and more preferably between 0 and 50 °C and even more preferably between 20 °C and 40 °C; whereas the foaming or expansion temperature (Te) of step vi) can be between 50 °C and 130 °C, preferably between 60 °C and 115 °C, and more preferably between 70 °C and 105 °C; with the proviso that the saturation temperature (Ts) is equal to or less than the expansion temperature (Te).

The nanocellular expanded polymer beads according to the present invention are thermoplastic and, accordingly, can be sintered by means of applying temperature and pressure to generate blocks of macroscopic material with complex geometries. These nanocellular polymeric materials retain the properties of the expanded polymer beads, therefore being low density or very low density materials, with a high thermal insulation capacity and excellent mechanical properties. As mentioned hereinabove, these nanocellular polymeric materials can be referred to as "low density", since they are formed from expanded beads having a relative density less than 0.25, or as "very low density" in those embodiments in which the polymeric materials are formed from expanded beads with a relative density less than 0.20, wherein the relative density of the expanded beads can be calculated as described herein. Accordingly, the present invention also relates to the use of the expanded polymer beads described herein for manufacturing a nanocellular polymeric material, particularly a macroscopic structure with a variable geometry, by means of sintering.

Unlike cellular materials with micrometric cells, in which the pores or cells disappear when said material is ground, an important feature of the expanded polymer beads object of the present invention is that the internal structure of cells of nanocellular size, that is, a size less than 1 µm, preferably less than 500 nm, and more preferably less than 300 nm, is maintained throughout the grinding or micronising process. This represents a significant advantage since it allows generating powder with a nanocellular structure that can in turn be used to form the core of vacuum insulation panels.

Thus, in particular embodiments of the present invention, the nanocellular expanded polymer beads can be ground, for example, by means of micronisation or another conventional technique for reducing the particle size of a solid, forming a powder that maintains the nanocellular structure and density of the expanded polymer beads, and, accordingly, it can be used as a core in vacuum insulation panels (or VIP). The nanocellular powder that can be generated with the nanocellular beads of the invention can have a particle size comprised between 5 µm and 500 µm, preferably between 10 µm and 250 µm, and more preferably between 15 µm and 150 µm, wherein the particle size is determined by means of dynamic light scattering (DLS).

The nanocellular expanded polymer beads object of this invention can also be used as a filler, particularly, in thermal insulators, without needing to subject them to a further sintering or grinding process.

Accordingly, the present invention also relates to a thermal insulating material obtained or obtainable from the nanocellular expanded polymer beads described herein, particularly to a thermal insulating material selected from the group consisting of nanocellular powder and nanocellular polymeric material.

The method for the manufacture of expanded polymer beads according to the present invention can be carried out in a system comprising, as shown in Figures 1a and 1b: an autoclave (1) suitable for working at temperatures between -50 °C and 350 °C and pressures between 2 MPa and 150 MPa, wherein the autoclave comprises a stirring system (3), heaters and/or coolers (8) which allow adjusting the temperature of the dispersion of polymer beads (2) inside the autoclave (1) to the established values, an inlet device for the gas used as the foaming agent into the autoclave (1) which can be formed by a gas tank (6) connected to an inlet of the autoclave (1) through a pump (7) or pressure regulator, and an outlet comprising a depressurisation valve (4), preferably located in the lower part of the autoclave, wherein the valve (4) is suitable for withstanding maximum pressures of 150 MPa and for being able to depressurise the autoclave at a depressurisation speed between 10 MPa/s and 1000 MPa/s, preferably between 20 MPa/s and 300 MPa/s, and more preferably between 50 MPa/s and 200 MPa/s. The outlet of the autoclave (1) comprising the depressurisation valve (4) is attached to a depressurisation tank, also referred to as thermostatic tank (5), which may comprise heaters and/or coolers (12) suitable for adjusting the temperature of the second liquid medium (11) or the dispersion of expanded polymer beads (11') to the established values, particularly between 0 °C and 300 °C, and it can also contain a stirring system (13). In addition, the thermostatic tank (5) may comprise at least one outlet or extraction system (14) which allows the extraction of the expanded polymer beads obtained in the method of the present invention.

The thermostatic tank (5) is connected to the outlet of the autoclave (1) through the depressurisation valve (4) in a suitable manner so that the transfer time period, that is, the time between depressurisation and extraction of the saturated beads from the autoclave (1) and the introduction of said beads into the second liquid medium is the shortest time possible a maximum of 15 seconds, 10 seconds or 5 seconds, the transfer time preferably being less than 1 second.

Particularly, the thermostatic tank (5) can be connected directly to the depressurisation valve (4) such that the dispersion of saturated beads can pass directly from the autoclave (1) to the second liquid medium (11) contained in the thermostatic tank (5) during the step vi) of depressurisation. Alternatively, the thermostatic tank (5) can be connected to the depressurisation valve (4) through connection means (15) such as, for example, a pipe, with means suitable for heating at the established temperature, particularly at the expansion temperature (Te) at which the second liquid medium (11) is found in the thermostatic tank (5).

In addition, the system used for carrying out the method of producing expanded polymer beads preferably comprises means suitable for carrying out a precise control of the temperature, pressure and depressurisation speed of the autoclave (1), as well as of the temperature of the thermostatic tank (5).

Throughout the entire document, all the indicated ranges should be considered to include the indicated upper and lower limits, unless expressly indicated otherwise.

### BRIEF DESCRIPTION OF THE FIGURES

**Figure 1****.** Diagram of a system suitable for carrying out the method of producing nanocellular expanded polymer beads according to the present invention. Figure 1a shows the system during the step of saturation, whereas Figure 1b shows the system during the step of expansion of the beads.
**Figure 2****.** From left to right: 2a) image of the starting PMMA solid beads, 2b) image of expanded polymer beads foamed 15 seconds after depressurisation of the autoclave (Example 1.1) and 2c) image of the expanded beads foamed 30 seconds after depressurisation (Example 1.2).
**Figure 3**. Cellular structure of PMMA expanded polymer beads from Example 1 foamed 15 seconds after their extraction from the autoclave (Figure 3a) and foamed 30 seconds after the extraction from the autoclave (Figure 3b).
**Figure 4****.** Micrographs of the solid skin formed in the expanded polymer beads obtained in Example 1 after being foamed 15 seconds after depressurisation (Figure 4a), 30 seconds after (Figure 4b), and a control sample (sheet type) of PMMA foamed by means of a conventional process (Figure 4c).
**Figure 5****.** Graph in which the relative density of the expanded polymer beads manufactured in Example 2 based on the transfer time (time between the extraction of the saturated beads from the autoclave and foaming) is represented.

### EXAMPLES

### Comparative example: Manufacture of a control sample (sheet type) foamed by dissolving gases

To prepare this sample, a 4 mm-thick sheet of PMMA was introduced in a conventional autoclave to perform the foaming process by means of foaming technology by dissolving gases. The sheet of PMMA had a density of 1180 kg/m³ (measured using a gas pycnometer by means of the method described hereinabove), a prism shape with a square base, with dimensions of 20 mm in length and 4 mm thick. The sample in the autoclave was pressurised with CO₂ at a pressure of 31 MPa for a period of 20 h at 25 °C. The long time used is due to the fact that the sample is thick, and this considerably increases the time needed to saturate the material. After this time, the pressure was released at the upper part of the autoclave. The discharge speed in the first few instants of depressurisation was 100 MPa/s. After releasing the pressure, the autoclave was opened and the completely saturated PMMA sample was transferred to a thermostatic bath containing water at 95 °C. The transfer time between depressurisation and introduction of the sheet in the bath was 2 minutes (minimum time needed to release all the pressure and open the autoclave). In this example, the foaming time was 1 minute. After this period, the expanded sheet was extracted and immediately introduced in a third liquid medium consisting of water at room temperature (20 °C) for stabilisation thereof for one minute.

The samples of this example have the following characteristics: Density 0.319 g/cm³, relative density 0.270, cell size 220 nm, skin thickness greater than 15 microns.

It is not possible to manufacture nanocellular expanded polymer beads such as those manufactured in the method described in the present invention using this conventional gas dissolution foaming method. First, due to the long time needed to extract the samples from the autoclave (2 minutes), the amount of residual gas inside the micropellets at the time of introducing them in the thermostatic bath is too low to give rise to cell sizes less than one micron. Secondly, it is impossible to manufacture a significant amount of micropellets, because when they contact one another, they cluster together and adhere to one another, losing the possibility of obtaining separate foamed beads.

### Example 1: Manufacturing PMMA expanded beads according to the method of the invention

### 1.1. Transfer time of 15 seconds

For the preparation of the manufacturing batch of PMMA expanded beads, the amount of 415 ml of water was introduced in the reactor (autoclave). The following additives were also introduced along with this water: calcium stearate (0.2 g), talc (0.1 g) and alkyl sulphonate (0.15 g). Once the liquid with additives was introduced, the amount of 30 g of solid PMMA micropellets was added. These micropellets had a density of 1180 kg/m³ (by means of gas pycnometry at a temperature between 21 and 23 °C) and a cylindrical geometry with a length of 2 mm and diameter of 1 mm. The mixture, under constant stirring at 400 rpm, was pressurised with CO₂ at a pressure of 31 MPa for a period of 2 hours at 25 °C. After that time, the depressurisation valve of the autoclave was opened at a depressurisation speed of 45 MPa/s, discharging the content from same in less than one second. The saturated beads were rapidly introduced in a thermostatic water bath at 95 °C, such that the time elapsed between depressurisation and the introduction of the beads in the bath (also referred to herein as "transfer time") was 15 seconds.

To carry out this example, the temperature of the thermostatic bath was kept at 95 °C, and the saturated PMMA beads were kept therein for 5 seconds. After this period, the expanded beads were extracted and immediately introduced in a third liquid medium consisting of water at room temperature (20 °C) for stabilisation thereof for one minute.

Expanded PMMA beads were obtained with a density of 0.158 g/cm³ (measured by means of Archimedes' principle described hereinabove, at a temperature between 21 and 23 °C), a relative density of 0.134 with respect to the precursor solid beads and a thickness of solid skin (measured by means of X-ray radiographies) of 0.6 µm.

### 1.2. Transfer time of 30 seconds

To determine the importance of the transfer time in the method of the present invention, Example 1.1. described above was repeated, with the exception that the time elapsed between depressurisation and the introduction of the beads in the bath was 30 seconds.

Expanded PMMA beads were obtained with a density of 0.360 g/cm³ (measured by means of Archimedes' principle described hereinabove, at a temperature between 21 and 23 °C), a relative density with respect to the starting solid beads of 0.305 and a thickness of solid skin (measured by X-ray radiography) of 3.4 µm.

### 1.3. Evaluation of the effect of the time between depressurisation and foaming

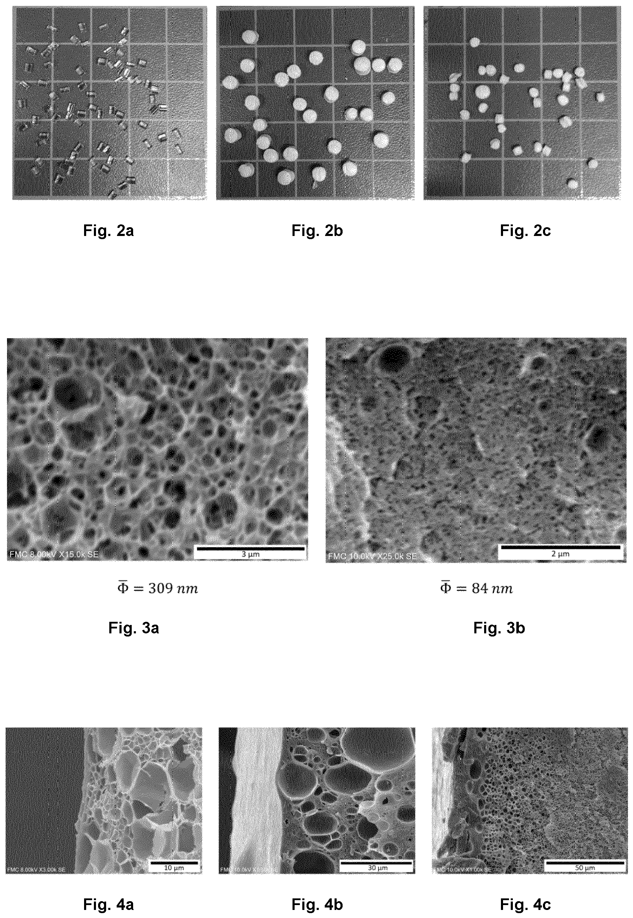

The PMMA nanocellular beads foamed in a thermostatic bath 15 and 30 seconds after depressurisation (transfer time) were compared, see Examples 1.1 and 1.2 described above. The images of Figure 2 show the evolution of the beads before (Figure 2a) and after foaming (Figures 2b and 2c), by means of the method according to the present invention.

As can be observed in these images, the beads foamed 15 seconds (Figure 2b) after depressurisation have a higher degree of expansion than the beads foamed 30 seconds after depressurisation (Figure 2c). Specifically, the first expanded beads have a relative density of 0.134 with respect to the solid beads, whereas the expanded beads that were foamed after 30 seconds have a relative density of 0.305. This considerable difference is due to the fact that the gas (foaming agent) that has been dissolved in the beads in the saturation process in the autoclave (1) starts to escape from the polymer from the moment of depressurisation and, due to the fact that the surface-to-volume ratio of the beads is greater in samples of a larger size, the gas diffusion speed increases, causing the delay of a few seconds in foaming to be able to drastically affect the final properties of the nanocellular expanded polymer beads obtained. In this case, the difference of 15 seconds between the foaming of the beads of Example 1.1 and the beads of Example 1.2 translates into the expansion capacity of the beads dropping considerably as there is less dissolved gas in the second case.

As previously explained, the time between depressurisation and foaming of the samples can affect the cellular structure of the nanocellular expanded polymer beads. As can be seen in Figure 3, the cellular structure of the expanded beads obtained when foaming the beads 15 seconds after their extraction from the autoclave (Figure 3a) differs considerably from those foamed after 30 seconds (Figure 3b). This is because, in the second case, since there is not enough dissolved gas in the polymer, expansion of the bead is very limited. Despite the fact that the average cell size of the expanded polymer beads obtained 30 seconds after their extraction is less than that of the expanded beads obtained after 15 seconds, this does not represent an improvement in thermal properties because, given the high density thereof, heat can be transmitted through the polymer walls.

The time between the extraction of the samples and the foaming thereof can also affect the formation of the solid skin around the nanocellular polymer. Figures 4a and 4b show the solid skin formed in expanded beads obtained by means of the method described herein, wherein the transfer time is 15 seconds (Figure 4a) or 30 seconds (Figure 4b), also comparing it with the solid skin formed in 4 mm-thick PMMA sheets, foamed by means gas dissolution following the standard method in a conventional autoclave (see the Comparative Example).

In the first case, the average thickness of the solid skin that is formed is hardly 0.6 µm, which means that it will have a very low impact on the density of the expanded bead. In the expanded bead that was foamed 30 seconds after its extraction from the autoclave, the skin has an average value of 3.4 µm thick, increasing the density of the foam by 1.3% with respect to the density it would have without that skin. In the case of the 4 mm-thick PMMA sample foamed in a conventional autoclave (comparative sample), despite having a smaller surface-to-volume ratio than the expanded polymer beads according to the present invention and there is less diffusion of the gas in the polymer, the time span of 2 minutes elapsing from depressurisation until foaming takes place causes a solid skin of more 15 µm to be formed. This increases the density of the nanocellular foam by 13%.

### Example 2: Manufacturing expanded beads of a mixture of PMMA and MAM according to the method of the invention

For the preparation of the manufacturing batch of expanded beads of this example, the amount of 415 ml of water was introduced in the reactor (autoclave). The following additives were also introduced along with this water: calcium stearate (0.2 g), talc (0.1 g) and alkyl sulphonate (0.15 g). Once the liquid with additives was introduced, the amount of 30 g of solid micropellets formed by a mixture of PMMA and MAM with a content of 1% by weight of MAM was added. These micropellets had a density of 1180 kg/m³ (by means of gas pycnometry at a temperature between 21 and 23 °C) and a cylindrical geometry with a length of 2 mm and diameter of 1 mm. The mixture, under constant stirring at 400 rpm, was pressurised at a pressure of 15 MPa for a period of 2 hours at 25 °C. After that time, the depressurisation valve of the autoclave was opened at a depressurisation speed of 15 MPa/s, discharging the content from same in less than one second. The saturated beads were introduced in a thermostatic water bath at 100 °C and were kept in said bath for 10 s. After this period, the expanded beads were extracted and immediately introduced in a third liquid medium consisting of water at room temperature (20 °C) for stabilisation thereof for one minute.

Several variants of this example were carried out using the following transfer times: 15 s, 30 s, 45 s, 60 s and 90 s.

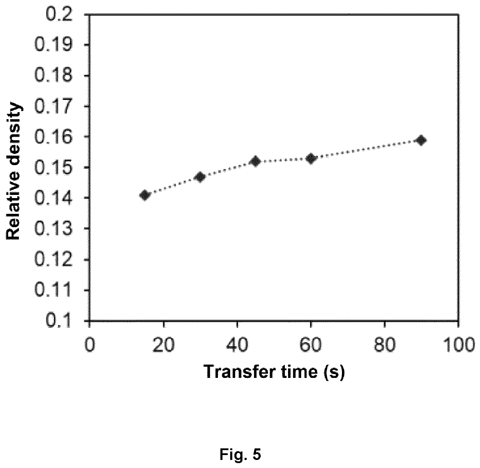

In this example, the four samples had a nanocellular structure with cell sizes less than 1 µm. The transfer time in this case has the effect of increasing the relative density (see Figure 5) from values of 0.141 up to values of 0.159 when the transfer time increases from 15 s to 90 s. Like in Example 1, the relative density is the ratio between the density of the starting solid beads and the density of the expanded beads (measured by means of Archimedes' principle described hereinabove, at a temperature between 21 and 23 °C). This increase in density is due to an increase in the thickness of the solid skin. In the 60 s and 90 s samples, the thickness of the skin exceeds 15 µm, so they are not considered optimal times, despite low densities and cell sizes in the required range being obtained.

These results show the advantages involved with the implantation of this process for the production of nanocellular beads. On one hand, the cycle time has been greatly reduced and, on the other hand, the time that elapses between the extraction of the saturated beads and foaming has been drastically reduced, obtaining higher degrees of expansion and a reduction the thickness of the solid skin that is formed on the outside of the expanded polymer beads.

## Claims

1. Expanded polymer beads obtained from solid polymer beads, **characterised by** comprising cells having an average size less than 1 µm, and a relative density less than 0.25, wherein the relative density is the ratio between the density of the expanded polymer beads with respect to the density of the solid polymer beads; and a solid skin with a thickness less than 5 µm, wherein the average size, the relative density and the thickness of the solid skin are determined as defined in the description.

2. The expanded polymer beads according to claim 1, comprising a solid skin with a thickness less than 3 µm, wherein the thickness of the solid skin is determined as defined in the description.

3. The expanded polymer beads according to any one of claims 1 to 2, wherein the polymeric material of the beads is selected from the group consisting of polymethylmethacrylate (PMMA), polymethylmethacrylate-polybutylacrylate-polymethylmethacrylate (MAM) copolymer, polycarbonate (PC), polyphenylsulfone (PPSU), polyetherimide (PEI), thermoplastic polyurethane (TPU), polypropylene (PP), polypropylene copolymers, polyethylene (PE), polyethylene terephthalate (PET), polyethylene terephthalate copolymers (PET(COP)), poly(vinyl chloride) (PVC), polyetheretherketone (PEEK), natural rubber (NR), ethylene propylene diene monomer (EPDM) rubber, polylactic acid (PLA), thermoplastic starch (TPS), polyhydroxybutyrate (PHB) and a combination of the above.

4. The expanded polymer beads according to any one of claims 1 to 3, with a thermal conductivity less than 38 mW/mK.

5. A method for the manufacture of the expanded polymer beads as described in any one of claims 1 to 4, by means of dissolution foaming of a foaming agent, said method comprising:
i) obtaining a dispersion of solid polymer beads (2) in an autoclave (1), wherein the dispersion (2) comprises:
a. solid polymer beads with a size of 0.5 mm to 4 mm; and
b. a first liquid medium;
ii) adjusting the temperature of the dispersion of solid polymer beads (2) to a saturation temperature (Ts) between -50 °C and 300 °C, keeping the dispersion under stirring,
iii) adding a foaming agent until reaching a pressure of 2 MPa to 150 MPa, keeping the dispersion of solid polymer beads (2) under stirring and at the saturation temperature (Ts) of step ii);
iv) maintaining the conditions of pressure, temperature and stirring indicated in step iii) for obtaining polymer beads saturated with the foaming agent;
v) depressurising the autoclave (1) at a speed between 10 MPa/s and 1000 MPa/s and simultaneously extracting the dispersion of polymer beads saturated with foaming agent from the autoclave (1) into a second liquid medium (11) at an expansion temperature (Te) between 0 and 300 °C; and
vi) keeping the dispersion of polymer beads saturated with foaming agent in the second liquid medium (11) at the expansion temperature defined in step v) for obtaining the expanded polymer beads,
wherein the period of time elapsed between the extraction from the autoclave until the saturated polymer beads are introduced into the second liquid medium at the established expansion temperature (Te) is a maximum of 15 seconds.

6. The method according to claim 5, wherein the dispersion of solid polymer beads (2) of step i) comprises an additive substance selected from surfactants, anticaking agents, antistatic agents and a combination of the above.

7. The method according to any one of claims 5 to 6, wherein the percentage by weight of solid polymer beads in the dispersion of solid polymer beads of step i) is 5% to 50%, amounts expressed by weight of beads with respect to the total weight of beads and first liquid medium.

8. The method according to any one of claims 6 to 7, wherein the percentage by weight of additive substance is 0.1% to 3%, amounts expressed by weight of additive substance with respect to the total weight of the dispersion of solid polymer beads of step a).

9. The method according to any one of claims 5 to 8, wherein the foaming agent added in step iii) is an inert gas.

10. The method according to any one of claims 5 to 9, wherein step v) comprises the injection of inert gas into the autoclave (1) simultaneously to depressurisation thereof.

11. The method according to any one of claims 5 to 10, wherein the second liquid medium is water, and it is at an expansion temperature greater than 0 and less than 100 °C.

12. The method according to any one of claims 5 to 11, wherein the polymer of the beads is polymethylmethacrylate (PMMA), step iii) comprises adding CO₂ until reaching a pressure of 31 MPa.

13. The method according to any one of claims 5 to 12, wherein the beads are made of polymethylmethacrylate (PMMA), the saturation temperature is between -50 °C and 150 °C, and the expansion temperature is between 50 and 130 °C, with the proviso that the saturation temperature is equal to or less than the expansion temperature.

14. Use of the expanded polymer beads described in any one of claims 1 to 4, for manufacturing a nanocellular polymeric material by means of sintering or manufacturing nanocellular powder.

15. A thermal insulating material, preferably selected from the group consisting of nanocellular powder and nanocellular polymeric material, obtained from the expanded polymer beads described in any one of claims 1 to 4.

## Patentansprüche

1. Expandierte Polymerkügelchen, die aus festen Polymerkügelchen erlangt wurden, **dadurch gekennzeichnet, dass** sie Zellen umfassen, die eine durchschnittliche Größe von weniger als 1 µm und eine relative Dichte von weniger als 0,25 aufweisen, wobei die relative Dichte das Verhältnis zwischen der Dichte der expandierten Polymerkügelchen in Bezug auf die Dichte der festen Polymerkügelchen ist; und eine feste Haut mit einer Dicke von weniger als 5 µm, wobei die durchschnittliche Größe, die relative Dichte und die Dicke der festen Haut wie in der Beschreibung definiert bestimmt sind.

2. Expandierte Polymerkügelchen nach Anspruch 1, umfassend eine feste Haut mit einer Dicke von weniger als 3 µm, wobei die Dicke der festen Haut wie in der Beschreibung definiert bestimmt ist.

3. Expandierte Polymerkügelchen nach einem der Ansprüche 1 bis 2, wobei das Polymermaterial der Kügelchen aus der Gruppe ausgewählt ist bestehend aus Polymethylmethacrylat (PMMA), Polymethylmethacrylat-Polybutylacrylat-Polymethylmethacrylat(MAM)-Copolymer, Polycarbonat (PC), Polyphenylsulfon (PPSU), Polyetherimid (PEI), thermoplastischem Polyurethan (TPU), Polypropylen (PP), Polypropylen-Copolymeren, Polyethylen (PE), Polyethylenterephthalat (PET), Polyethylenterephthalat-Copolymeren (PET(COP)), Poly(vinylchlorid) (PVC), Polyetheretherketon (PEEK), Naturkautschuk (NR), Ethylen-Propylen-Dien-Monomer (EPDM)-Kautschuk, Polymilchsäure (PLA), thermoplastischer Stärke (TPS), Polyhydroxybutyrat (PHB) und einer Kombination der oben genannten.

4. Expandierte Polymerkügelchen nach einem der Ansprüche 1 bis 3 mit einer Wärmeleitfähigkeit von weniger als 38 mW/mK.

5. Verfahren zur Herstellung der expandierten Polymerkügelchen, wie in einem der Ansprüche 1 bis 4 beschrieben, mittels Lösungsschäumen eines Schaummittels, das Verfahren umfassend:
i) Erlangen einer Dispersion aus festen Polymerkügelchen (2) in einem Autoklav (1), wobei die Dispersion (2) umfasst:
a. feste Polymerkügelchen mit einer Größe von 0,5 mm bis 4 mm; und
b. ein erstes flüssiges Medium;
ii) Einstellen der Temperatur der Dispersion aus festen Polymerkügelchen (2) auf eine Sättigungstemperatur (Ts) zwischen -50 °C und 300 °C, wobei Dispersion unter Rühren gehalten wird,
iii) Hinzufügen eines Schaummittels, bis ein Druck von 2 MPa bis 150 MPa erreicht ist, wobei die Dispersion aus festen Polymerkügelchen (2) unter Rühren und bei der Sättigungstemperatur (Ts) von Schritt ii) gehalten wird;
iv) Aufrechterhalten der in Schritt iii) angegebenen Druck-, Temperatur- und Rührbedingungen zum Erlangen der mit dem Schaummittel gesättigten Polymerkügelchen;
v) Herabsetzen des Drucks des Autoklavs (1) mit einer Geschwindigkeit zwischen 10 MPa/s und 1000 MPa/s und gleichzeitig Extrahieren der mit Schaummittel gesättigten Dispersion von Polymerkügelchen aus dem Autoklav (1) in ein zweites flüssiges Medium (11) bei einer Expansionstemperatur (Te) zwischen 0 und 300 °C; und
vi) Halten der mit Schaummittel gesättigten Dispersion von Polymerkügelchen in dem zweiten flüssigen Medium (11) bei der in Schritt v) definierten Expansionstemperatur zum Erlangen der expandierten Polymerkügelchen,
wobei die Zeitspanne zwischen der Entnahme aus dem Autoklav bis zum Einbringen der gesättigten Polymerkügelchen in das zweite flüssige Medium bei der eingestellten Expansionstemperatur (Te) maximal 15 Sekunden beträgt.

6. Verfahren nach Anspruch 5, wobei die Dispersion aus festen Polymerkügelchen (2) aus Schritt i) einen Zusatzstoff umfasst, der ausgewählt ist aus Tensiden, Rieselmitteln, antistatischen Mitteln und einer Kombination der oben genannten.

7. Verfahren nach einem der Ansprüche 5 bis 6, wobei der Gewichtsanteil fester Polymerkügelchen in der Dispersion fester Polymerkügelchen aus Schritt i) 5 % bis 50 % beträgt, wobei die Mengen als Gewicht der Kügelchen bezogen auf das Gesamtgewicht der Kügelchen und des ersten flüssigen Mediums ausgedrückt sind.

8. Verfahren nach einem der Ansprüche 6 bis 7, wobei der Gewichtsanteil des Zusatzstoffs 0,1 % bis 3 % beträgt, wobei die Mengen als Gewicht des Zusatzstoffs bezogen auf das Gesamtgewicht der Dispersion fester Polymerkügelchen aus Schritt a) ausgedrückt sind.

9. Verfahren nach einem der Ansprüche 5 bis 8, wobei das in Schritt iii) hinzugefügte Schaummittel ein Inertgas ist.

10. Verfahren nach einem der Ansprüche 5 bis 9, wobei Schritt v) die Injektion von Inertgas in den Autoklav (1) gleichzeitig mit dessen Druckentlastung umfasst.

11. Verfahren nach einem der Ansprüche 5 bis 10, wobei das zweite flüssige Medium Wasser ist und es bei einer Expansionstemperatur von mehr als 0 und weniger als 100 °C vorliegt.

12. Verfahren nach einem der Ansprüche 5 bis 11, wobei das Polymer der Kügelchen Polymethylmethacrylat (PMMA) ist, wobei Schritt iii) das Hinzufügen von CO₂ umfasst bis ein Druck von 31 MPa erreicht ist.

13. Verfahren nach einem der Ansprüche 5 bis 12, wobei die Kügelchen aus Polymethylmethacrylat (PMMA) hergestellt werden, die Sättigungstemperatur zwischen -50 °C und 150 °C liegt und die Expansionstemperatur zwischen 50 und 130 °C liegt, mit der Maßgabe, dass die Sättigungstemperatur gleich oder kleiner als die Expansionstemperatur ist.

14. Verwendung der in einem der Ansprüche 1 bis 4 beschriebenen expandierten Polymerkügelchen zur Herstellung eines nanozellulären Polymermaterials mittels Sintern oder zur Herstellung von nanozellulärem Pulver.

15. Wärmeisolierendes Material, vorzugsweise ausgewählt aus der Gruppe bestehend aus nanozellulärem Pulver und nanozellulärem Polymermaterial, das aus den in einem der Ansprüche 1 bis 4 beschriebenen expandierten Polymerkügelchen erlangt wurde.

## Revendications

1. Billes de polymère expansé obtenues à partir de billes de polymère solide, **caractérisées en ce qu'**elles comprennent des cellules ayant une taille moyenne inférieure à 1 µm et une densité relative inférieure à 0,25, la densité relative étant le rapport entre la densité des billes de polymère expansé et la densité des billes de polymère solide ; et une peau solide d'une épaisseur inférieure à 5 µm, la taille moyenne, la densité relative et l'épaisseur de la peau solide étant déterminées comme indiqué dans la description

2. Billes de polymère expansé selon la revendication 1, comprenant une peau solide d'une épaisseur inférieure à 3 µm, l'épaisseur de la peau solide étant déterminée comme défini dans la description.

3. Billes de polymère expansé selon l'une quelconque des revendications 1 à 2, dans lesquelles le matériau polymère des billes est choisi dans le groupe constitué par le poly(méthacrylate de méthyle) (PMMA), le copolymère poly(méthacrylate de méthyle)-poly(acrylate de butyle)-poly(méthacrylate de méthyle) (MAM), le polycarbonate (PC), le polyphénylsulfone (PPSU), le polyétherimide (PEI), le polyuréthane thermoplastique (TPU), le polypropylène (PP), les copolymères de polypropylène, le polyéthylène (PE), le polyéthylène téréphtalate (PET), les copolymères de polyéthylène téréphtalate (PET(COP)), le poly(chlorure de vinyle) (PVC), le polyétheréthercétone (PEEK), le caoutchouc naturel (NR), le caoutchouc éthylène-propylène-diène monomère (EPDM), l'acide polylactique (PLA), l'amidon thermoplastique (TPS), le polyhydroxybutyrate (PHB) et une combinaison de ceux-ci.

4. Billes de polymère expansé selon l'une quelconque des revendications 1 à 3, avec une conductivité thermique inférieure à 38 mW/mK.

5. Procédé de fabrication des billes de polymère expansé telles que décrites dans l'une quelconque des revendications 1 à 4, par moussage par dissolution d'un agent moussant, ledit procédé comprenant les étapes consistant à :
i) Obtenir une dispersion de billes de polymère solide (2) dans un autoclave (1), la dispersion (2) comprenant :
a. des billes de polymère solide d'une taille comprise entre 0,5 mm et 4 mm ; et
b. un premier milieu liquide ;
ii) ajuster la température de la dispersion de billes de polymère solide (2) à une température de saturation (Ts) comprise entre -50 °C et 300 °C, en maintenant la dispersion sous agitation,
iii) ajouter un agent moussant jusqu'à atteindre une pression comprise entre 2 MPa et 150 MPa, en maintenant la dispersion de billes de polymère solide (2) sous agitation et à la température de saturation (Ts) de l'étape ii) ;
iv) maintenir les conditions de pression, de température et d'agitation indiquées à l'étape iii) pour obtenir des billes de polymère saturées par l'agent moussant ;
v) dépressuriser l'autoclave (1) à une vitesse comprise entre 10 MPa/s et 1 000 MPa/s et extraire simultanément la dispersion de billes de polymère saturées en agent moussant de l'autoclave (1) dans un second milieu liquide (11) à une température d'expansion (Te) comprise entre 0 et 300 °C ; et
vi) maintenir la dispersion de billes de polymère saturées d'agent moussant dans le second milieu liquide (11) à la température d'expansion définie à l'étape v) pour obtenir les billes de polymère expansées,
la période de temps écoulée entre l'extraction de l'autoclave et l'introduction des billes de polymère saturées dans le second milieu liquide à la température d'expansion (Te) établie étant de 15 secondes au maximum.

6. Procédé selon la revendication 5, dans lequel la dispersion de billes de polymère solide (2) de l'étape i) comprend une substance additive choisie parmi les tensioactifs, les agents anti-agglomérants, les agents antistatiques et une combinaison de ceux-ci.

7. Procédé selon l'une quelconque des revendications 5 à 6, dans lequel le pourcentage en poids de billes de polymère solide dans la dispersion de billes de polymère solide de l'étape i) est compris entre 5 % et 50 %, les quantités étant exprimées en poids de billes par rapport au poids total des billes et du premier milieu liquide.

8. Procédé selon l'une quelconque des revendications 6 à 7, dans lequel le pourcentage en poids de substance additive est compris entre 0,1 % et 3 %, les quantités étant exprimées en poids de substance additive par rapport au poids total de la dispersion de billes de polymère solide de l'étape a).

9. Procédé selon l'une quelconque des revendications 5 à 8, dans lequel l'agent moussant ajouté à l'étape iii) est un gaz inerte.

10. Procédé selon l'une quelconque des revendications 5 à 9, dans lequel l'étape v) comprend l'injection d'un gaz inerte dans l'autoclave (1) simultanément à sa dépressurisation.

11. Procédé selon l'une quelconque des revendications 5 à 10, dans lequel le deuxième milieu liquide est de l'eau, et il est à une température d'expansion supérieure à 0 et inférieure à 100 °C.

12. Procédé selon l'une quelconque des revendications 5 à 11, dans lequel le polymère des billes est le poly(méthacrylate de méthyle) (PMMA), l'étape iii) comprend l'ajout de CO₂ jusqu'à atteindre une pression de 31 MPa.

13. Procédé selon l'une quelconque des revendications 5 à 12, dans lequel les billes sont en poly(méthacrylate de méthyle) (PMMA), la température de saturation est comprise entre -50 °C et 150 °C, et la température d'expansion est comprise entre 50 et 130 °C, étant entendu que la température de saturation est égale ou inférieure à la température d'expansion.

14. Utilisation des billes de polymère expansé décrites dans l'une quelconque des revendications 1 à 4, pour la fabrication d'un matériau polymère nanocellulaire par frittage, ou la fabrication d'une poudre nanocellulaire.

15. Matériau isolant thermique, de préférence choisi dans le groupe constitué par la poudre nanocellulaire et le matériau polymère nanocellulaire, obtenu à partir des billes de polymère expansé décrites dans l'une quelconque des revendications 1 à 4.
